# EUROPÄISCHE PATENTSCHRIFT

(11) **EP 0 925 496 B1**
(45) Veröffentlichungstag und Bekanntmachung des Hinweises auf die Patenterteilung: **27.11.2002**
(21) Anmeldenummer: 97918942.0
(22) Anmeldetag: 24.07.1997
(51) Int. Cl.: G01N 21/55

(54) **EINRICHTUNG ZUM BEURTEILEN VON REFLEXIONSVERHALTEN**
ARRANGEMENT FOR ASSESSING REFLECTION BEHAVIOUR
DISPOSITIF POUR EVALUER DES COMPORTEMENTS EN REFLEXION

(30) Priorität: 12.09.1996 DE 19637131
(43) Veröffentlichungstag der Anmeldung: 30.06.1999
(73) Patentinhaber: Autronic-Melchers GmbH, 76229 Karlsruhe (DE)
(72) Erfinder: BECKER, Michael, D-76135 Karlsruhe (DE)
(86) Internationale Anmeldenummer: EP9704000
(87) Internationale Veröffentlichungsnummer: WO98011424

(56) Entgegenhaltungen:
- EP-A- 0 286 529
- DE-A- 4 211 467
- K. MIYOSHI ET AL.: "Time Dependent Observation ..." JAPANESE JOURNAL OF APPLIED PHYSICS, LETTERS, Bd. 21, 1982, Seiten L616-L618, XP002049874
- R. BÄCKMANN: "Optoelektronische Sensoren - Sensoroptiken" MESSEN PRUFEN AUTOMATISIEREN, Nr. 3, März 1986, Seiten 131-135, XP002050066
- PATENT ABSTRACTS OF JAPAN vol. 18, no. 78 (P-1689), 8.Februar 1994 & JP 05 288638 A (HAMAMATSU PHOTONICS KK), 2.November 1993, in der Anmeldung erwähnt

## Beschreibung

Die Erfindung betrifft eine Einrichtung gemäß dem Oberbegriff des Anspruches 1.

Eine derartige Einrichtung ist aus der US-PS 5313542 bekannt. Sie dient insbesondere zur Qualitätsprüfung von Meßobjekten mit möglichst idealem Spiegelverhalten. Dafür wird dort ein Flächenelement in der Spiegelfläche unter einem gewissen Einfallswinkel (gegenüber der Normalen in diesem Punkt) mit einem depolarisierten und teleskopisch fokussierten leistungsgeregelten Laserstrahl, also mit einem kollimierten (parallelen) Strahl kohärenten (gleichfrequenten) Lichts beleuchtet. Die Einfallsrichtung dieses Teststrahles relativ zum Meßobjekt muß genau definiert sein und präzise eingestellt werden können, was erheblichen apparativen Aufwand für die geforderte mechanische Präzision und Reproduzierbarkeit des Meßvorganges bedingt.

Der unter dem Spiegelwinkel austretende Spiegelstrahl wird bei jenem System in einer Lichtfalle absorbiert. Bei nicht-idealem Spiegelverhalten im Reflexionspunkt verbleibt Streustrahlung unter verschiedenen vom (durch den Einfallswinkel definierten) Spiegelwinkel abweichenden Richtungen. Solches Streulicht wird mittels einer hohlkugelkappen-ähnlichen Detektor-Aufnahmeoptik erfaßt, die außerhalb des Spiegelstrahles, neben der Lichtfalle angeordnet ist und mit ihrem Hohlkugel-Mittelpunkt im Reflexionspunkt liegt. Normal zu der Kugelinnenfläche enden Lichtleitfasern, die unter räumlich gegeneinander versetzten Winkeln ebenfalls alle auf jenen Reflexionspunkt gerichtet sind. Die anderen Enden der Fasern dienen einer Abbildung der aufgenommenen Strahlungsverteilung auf einem Sensor-Array aus einigen in einer Ebene angeordneten Detektorelementen, so daß eine eindeutige Zuordnung zwischen der Position des von mehreren einander benachbarten Fasern angeregten Detektorelementes und der Richtung relativ zur optischen Achse jener Faseroptik besteht. Dadurch wird das Array zu einem Empfänger mit großer Apertur. Die an sich möglichst groß anzustrebende Detektor-Apertur ist in der Praxis allerdings durch technische Gegebenheiten bei der Bearbeitung der Glasfasern begrenzt.

In den Detektorelementen wird die in der jeweiligen Richtung vor der Spiegelfläche auftretende Streulichtintensität in elektrische Energie umgesetzt, die meßtechnisch erfaßt und weiterverarbeitet werden kann. Das Ergebnis ist eine "zweidimensionale" Streucharakteristik, weil Streulichtanteile sowohl in der wie auch außerhalb der Einfallsebene (definiert durch den beleuchtenden Strahl und die Normale zum beleuchteten Flächenelement) erfaßt werden.

Für reproduzierbare Messungen muß also nicht nur eine sehr definierte Ausrichtung des Teststrahl-Lasers erfolgen, sondern relativ dazu auch der Lichtfalle und der Detektoroptik auf exakt den selben Punkt; und das auch noch bei aufeinanderfolgendem Anfahren einer möglichst dichten Staffelung von über die nutzbare Spiegelfläche verteilten Reflexions-Testpunkten.

Zwar kann mit der gattungsbildenden Einrichtung ohne zusätzliche mechanische Verstell-Maßnahmen, allein durch die große Apertur des Empfängersystems, die Richtungsverteilung des reflektierten Lichtes in einem gewissen Raumwinkel auch außerhalb der Einfallsebene gemessen und zur quantitativen Beziehung zwischen eingestrahlter und gestreut reflektierter Energie für die Beurteilung der Qualität des fast idealen Spiegels ausgewertet werden. Jedoch ist dieser Bereich, über den dort die Lichtstreuung durch das Meßobjekt ohne mechanische Verstellung der Detektor-Optik gemessen werden kann, für die Anforderungen etwa der Anzeigentechnologie immer noch zu begrenzt, da viele elektrooptische Anzeigesysteme und insbesondere Flüssigkristall-Anzeigeelemente ihre wesentlichen Reflexionsanteile nicht nur vom Deckglas sondern auch von hinter einer transparenten Deckebene gelegenen streuenden Strukturen erhalten. Sie sind deshalb vom Verhalten idealer Spiegel weit entfernt. Solche Display-Objekte weisen vielmehr gewollt einen erheblichen diffusen Reflexionsanteil auf, und deren visuelle Performance ist als am besten zu bewerten, wenn eine derart diffuse Reflexion auftritt, daß eine aus der Umgebung störend einstrahlende (Punkt-)-Lichtquelle hinreichend gestreut wird, ohne die räumliche Definition des gerade dargestellten Zeichens zu sehr zu verwischen. Das gilt besonders bei transmissiv betriebenen Flüssigkristall-Anzeigen, da bei denen die im allgemeinen unvermeidlichen Streulichtanteile vor allem durch die gewollte Streuung an einer mikroskopisch rauhen Entspiegelungsschicht auf der obersten Anzeigeschicht und an winzigen Strukturen innerhalb der Flüssigkristallschicht, also erst unterhalb des Deckglases entstehen. Jene Reflexionsanteile reduzieren bei transmissiven Anzeigen stets den Nutzkontrast. Auch können die mittels des transmissiven Lichtes vermittelten Nutzinformationen in ihrer räumlichen Auflösung leiden, wenn z.B. eine zu starke Streuung an einem Anti-Elare-Belag auftritt, wie er in der Anzeigepraxis häufig zur Unterdrückung von Spiegelreflexen aufgebracht wird.

Ein Erfassen von solchen (Streu-)-Reflexionen über einen weiteren Bereich von Austrittswinkeln für jeden gerade vorgegebenen Einfallswinkel erfordert unterschiedliche Orientierungen der Detektor-Optik, also trotz der hohen Apertur dieser Empfängeroptik noch zusätzlich eine mechanische Winkelabtastung über den reflex-bestrahlten Halbraum. Dabei ist eine Bewegung der Optik um den Spiegelstrahl herum ohne Abschattung des einfallenden Teststrahles nur bei großen Einfallswinkeln möglich.

Auch ist das Spiegelverhalten auf Laser-Bestrahlung, selbst wenn sie wie erwähnt nach Möglichkeit depolarisiert wurde, wenig repräsentativ für die ergonomische Qualität etwa einer nicht hinreichend entspiegelten Oberfläche vor einer visuell aufzunehmenden (Bildschirm-)-Informationsdarstellung im weißen (unkohärenten) Umgebungslicht, dem sich in der Praxis je nach Abstand und Ausdehnung einer realen Störlichtquelle Bündel aus diffusen bis kollimierten Elementarstrahlen überlagern.

Gerade bei der Diskussion um ergonomische Sichtgeräte-Standards (vgl. M. Menozzi und H. Krüger "Reflexionen am Bildschirm - Beurteilung der Oberflächeneigenschaften", Seiten 240 bis 245 in ZEITSCHRIFT FÜR ARBEITSWISSENSCHAFT 1990/4) geht es nämlich um die ermüdenden Einflüsse der vielfältigen Raumlicht-Reflexe auf dem Sichtschirm. Denn die visuelle und somit die ergonomische Leistungsfähigkeit insbesondere von Anzeige-Elementen, wie sie für elektro-optische Bildschirme eingesetzt werden (z.B. Kathodenstrahlröhren oder Flüssigkristallanzeigenelemente), ist erfahrungsgemäß wesentlich davon abhängig, wie parasitäre Weißlichtquellen (z.B. der Raumbeleuchtung, der Fenstereinstrahlung, etc.) von diesen Bildschirmen reflektiert werden.

Wie in der kürzlich vorgestellten Arbeit des NIST (National Institute of Standards and Technology) ausführlich dargestellt ist (siehe: Specular and Diffuse Reflection Measurements of Electronic Displays, G. R. Jones, E. F. Kelley and T. A. Germer in SID96 Digest, Seite 203), sind aber die gegenwärtig bekannten integralen Verfahren nicht ausreichend, um die komplexen Reflexionen insbesondere von Bildschirmen in LCD-Technik bei unterschiedlichen Beleuchtungsverhältnissen zu messen und zu bewerten. Qualitätsanforderungen sind sinnvollerweise jedoch nur dann und insoweit formulierbar, als einfach anwendbare Methoden zur meßtechnischen Vergleichsbeurteilung konkurrierender Produkte verfügbar sind.

Zu einer Lösung dieses Problems führt auch nicht die etwa in der EP-A-0286529 beschriebene konoskopische Ermittlung des blickwinkelabhängigen Kontrastes von im Durchlichtbetrieb arbeitenden Flüssigkristall-Anzeigezellen, weil der dort interessierende, auf Doppelbrechungs-Effekten im Innern des Kristalls beruhende Intensitätsunterschied zwischen angesteuerten und nicht-angesteuerten Elementen offensichtlich gar nichts aussagt über dessen Reflexionsverhalten etwa auf umgebende Raumlichteinflüsse; zumal viele am Arbeitsplatz störende Reflexe etwa von Gerätegehäusen oder von Möbeloberflächen herrühren, also nicht gerade von im Durchlichtbetrieb arbeitenden Displays. Für die Ermittlung deren Anzeigekontrastes ist dort vorgesehen, ein Flächenelement in der objektseitigen Brennebene einer kollimierenden Optik in den beiden Schaltzuständen jeweils vom gleichen konischen Bündel paralleler Elementarstrahlen zu durchsetzen, dessen Verfügbarkeit offengelassen bleibt. Die dadurch in der bildseitigen Brennebene entstehende Fourier-Transformierte, eine Interferenzfigur mit zweidimensionaler Intensitätsverteilung, wird dann für eine Auswertung in Abhängigkeit von den Durchtrittswinkeln der konischen Strahlenbündel auf ein Detektor-Array hinter der Bildebene projiziert. Für eine konzentrische Justage der optischen Achsen wird ein Teil des Interferenzbildes vor dem Detektor-Array mittels eines halbdurchlässigen Spiegels aus der Einrichtung heraus in eine Visieroptik umgelenkt, weil ohne solche Justage die rechnerisch-geometrische Zuordnung zwischen den Durchstrahlungswinkeln und den Punkten in der Bildebene nicht stimmt.

Deshalb liegt vorliegender Erfindung die technische Problematik zugrunde, Verfahren bzw. Einrichtungen anzugeben, die rasch und reproduzierbar eine quantitative Beurteilung der ergonomischen Qualität von Objekten wie insbesondere von elektro-optischen Anzeige-Elementen erlauben.

Diese Aufgabe ist erfindungsgemäß im wesentlichen durch die Maßnahmen gemäß dem Hauptanspruch gelöst. Die führen bei handhabungstechnisch leicht und in weiten Winkelbereichen einstellbaren Beleuchtungsbedingungen zur schnellen und reproduzierbaren, aussagekräftigen meßtechnischen Bewertung von diffusen Reflexionsanteilen neben dem regulären Reflexionsanteilen über einen weiten Bereich von Reflexionswinkeln. Dabei erübrigen sich nun die bisherigen, apparativ aufwendigen mechanischen Winkel-Positioniererfordernisse mittels Drehverstellern hinsichtlich Lichtquelle und Empfängersystem relativ zum Meßobjekt. Jene Dreh-Positioniermittel sind jetzt ersetzt durch ein optisch abbildendes System nach dem Prinzip einer invers betriebenen kollimierenden Optik. Mittels der wird ein, in die bildseitige (hintere) Brennebene eingekoppelter, divergierender Strahl in einen parallelen Teststrahl - bzw. ein paralleler Strahl in einen konvergierenden Teststrahl - zur Beleuchtung des Meßobjektes umgewandelt. Eine Variation der Bestrahlungsrichtung (also des Teststrahl-Einfallswinkels) erfolgt nun durch bloße Linear-Verschiebung der Anregung (Lichtquelle) in jener Brennebene. Durch die Lage des Testpunktes in der vorderen Brennebene der kollimierenden Optik ist bereits sichergestellt, daß der einfallende wie auch der austretende Strahl beide das gleiche Flächenelement auf dem Testobjekt betreffen, so daß nun auch der Aufwand für eine individuelle Einstellung und Justage von einfallenden und gespiegelten Strahlen entfallen ist.

Zwar ist es aus der JP-A 5/288638 schon als solches bekannt, einen umgelenkten fokussierten Strahl zur Beleuchtung für einen LCD-Test einzusetzen. Dort wird die zweidimensionale Luminanzverteilung gemessen - wobei es regelmäßig darum geht, aus zwei Luminanzverteilungen die entsprechende Kontrastverteilung zwischen zwei unterschiedlichen Ansteuerungszuständen zu ermitteln, typisch bei eingeschaltetem und bei ausgeschaltetem (dort nicht transmissiv sondern reflektiv betriebenem) Display. Die dabei meßtechnisch erfaßten Effekte sind jedoch durch die kristalloptischen Eigenschaften verursacht, nicht durch beabsichtigte und / oder parasitäre Streueffekte auf der Oberfläche und im Innern der Anzeige.

Es geht bei vorliegender Erfindung also nicht um eine, von den jeweiligen kristalloptischen Eigenschaften bestimmte, Kontrastbeurteilung, sondern um die sich überlagernden Streueigenschaften unterschiedlicher optischer Grenzflächen (einschließlich der Anzeige-Oberfläche) bei optoelektronischen Anzeigen, insbesondere bei Flüssigkristall-Displays. Über deren (nicht-ideales) Streuverhalten, oder gar über dessen meßtechnische Erfassung, ist in jener JP-Publikation aber noch garnichts offenbart; auch nichts über eine unmittelbare Teststrahl-Einkoppelung eines divergierenden Strahles bzw. eines umgelenkten parallelen Strahles (ohne Erfordernis einer Fokussieroptik) mit variabler Strahl-Geometrie.

Für eine klare, visuell ermüdungsfrei aufzunehmende Informationsdarstellung beim Betrachten eines aktiven oder passiven elektrooptischen Bildschirmes als dem Meß-Objekt ist nämlich anzustreben, daß der gesamte einfallende Lichtstrom möglichst gleichmäßig diffus gestreut wird und dadurch der Spiegelstrahl in seiner Wirkung möglichst abgeschwächt oder gar wirkungslos gemacht wird. Eine parasitäre Lichteinstrahlung aus der Umgebung soll bei ihrer Reflexion auf dem Display nämlich möglichst derart zerstreut werden, daß nur ein geringer Anteil in das Auge des Betrachters gelangt, der überwiegende Anteil der eingestrahlten Störenergie aber in alle anderen Richtungen abgelenkt wird. Die Störeinstrahlung wird durch einen Teststrahl simuliert.

Der Teststrahl stammt nun vorzugsweise aus einer WeißlichtQuelle in der bildseitigen Brennebene der kollimierenden Optik. Er führt je nach seiner einstellbaren Strahlgeometrie gezielt zu einer parallelen bzw. zu einer variabel konvergierenden Punktbeleuchtung. Die Einfallsrichtung des Teststrahles ist nach Maßgabe der Position der Lichteinkopplung in die bildseitige Brennebene der kollimierenden Optik des konoskopischen Systemes veränderbar. Der Durchmesser des beleuchtenden Strahls und damit die Größe des beleuchteten Flächenelementes (des Reflexionsfleckes) ergeben sich aus dem veränderbaren öffnungswinkel eines divergierenden Quellstrahls. Dafür ist eine mechanische oder elektrooptische Blende, welche die Divergenz und Querschnittsform des Strahles falls nötig begrenzt, bzw. eine Linse oder ein anderes optisches System zum Erhöhen der Strahldivergenz vorgesehen. Der Raumwinkel, den der beleuchtende Teststrahl überstreicht, wird durch die Größe der Teststrahl-Querschnittsfläche in der bildseitigen Brennebene eingestellt.

Das zur Beleuchtung verwendete kollimierende Objektiv dient auch gleich noch dazu, die parallelen Elementarstrahlenbündel, die vom Meßfleck reflektiert werden, aufzunehmen und über ein weiteres optisches System auf eine zweidimensionale Detektoranordnung abzubilden. Dargestellt wird dabei die zweidimensionale Intensitätsverteilung in der hinteren (bildseitigen) Brennebene des kollimierenden Objektives. Mittels einer einstellbaren Pupille kann der Durchmesser des parallelen Meßstrahlbündels eingestellt werden. Damit dabei nicht nur das zentrale Strahlenbündel parallel zur optischen Achse erfaßt wird, sondern die Gesamtheit der Strahlenbündel, ist noch eine Feldlinse hinzugefügt.

Statt des in sich parallelen, definiert auf die Oberfläche gerichteten Teststrahles (entsprechend einer dezidierten, kleinflächigen Störlichtquelle aus großem Abstand) kann im Rahmen vorliegender Erfindung also auch eine zwischen gerichtet und diffus einstellbare konische Beleuchtung mit zweidimensionaler Richtungsverteilung über die kollimierende Optik erfolgen (entsprechend einer allgemein hellen Arbeitsplatz-Umgebung oder entsprechend großflächiger Störlichtquellen wie im Falle des Lichteinfalles durch ein Fenster, von einer hell reflektierenden Wand oder von einer größeren Deckenbeleuchtung). Dafür wird nun ein kollimierter Lichtstrahl über einen großflächigen nicht polarisierenden Strahlteiler (d.h. Strahlteiler-Würfel oder Strahlteilerplatte) in die hintere Brennebene der Optik des konoskopischen Systems eingekoppelt und durch dieses in einen nun konisch konvergierenden Teststrahl transformiert. Die Einfallsrichtung dieses beleuchtenden Lichts wird wieder über die Position der Lichteinkopplung in der hinteren Brennebene und die Größe des beleuchteten Flecks über den öffnungswinkel des beleuchtenden Strahls eingestellt. Denn eine Divergenz des einfallenden Strahls macht sich als eine Vergrößerung des damit ausgeleuchteten Flächenelements bemerkbar. Da wieder durch Ausblenden von Teilen des kollimierten Quellstrahles nach Position, Form und Größe eine beliebige Beleuchtung für den Meßfleck erzeugt werden kann, sind alle möglichen Beleuchtungssituationen, einschließlich der Extremfälle diffus und gerichtet konisch, durch entsprechendes Formen des Lichtstrahles realisierbar. Diese Formgebung kann sehr flexibel durch mechanische (z.B. absorbierende dünne Schichten bzw. Filme oder mechanische Lochblenden, die motorisch ausgetauscht bzw. in ihrer Lage und Form verändert werden) oder durch elektro-optische Elemente (z.B. LCDs) im Strahlengang erfolgen. Leuchtet der kollimierte (parallele) Quell-Lichtstrahl die hintere (bildseitige) Brennebene vollständig aus, so wird der gesamte, von der Linsenoptik überdeckte öffnungswinkelbereich ausgeleuchtet, d.h. eine diffuse Beleuchtung für das gerade reflektierende Flächenelement erzeugt. So sind prinzipiell alle möglichen Beleuchtungssituationen einschließlich der Extremfälle diffus und gerichtet konisch durch entsprechendes Formen des Quell-Lichtstrahles zu realisieren.

Wenn das Reflexlicht von einem Objekt, das auf seiner Oberfläche eine Polarisatorfolie trägt (wie im Falle aller kommerziell interessanten TN- und STN-Flüssigkristallanzeigen) über den erwähnten einen großflächigen Strahlteiler auf den Detektor fällt, dann sollte das Licht vor dem Strahlteiler depolarisiert werden, um eine Abhängigkeit des Meßergebnisses von der azimutalen Orientierung des Meßobjektes (also von einer Drehung um die Flächennormale im Meßpunkt) zu vermeiden. Diese störende Abhängigkeit kürzt sich zwar im Zuge einer Kontrastmessung bei der Quotientenbildung wieder heraus, aber in einer gemessenen Luminanzverteilung würde sie sonst als Fehler enthalten bleiben. Zur Depolarisierung kann aber auch in der hinteren (bildseitigen) Brennebene der kollimierenden Optik eine faseroptische Lichtleiterplatte angebracht sein.

Bei anisotrop reflektierenden Meßobjekten (z.B. LCDs mit Polarisatorfolien) sollten aber auf jeden Fall vorsorglich zwei voneinander unabhängige Messungen durchgeführt werden : Die Einfallsebene sollte einmal senkrecht und einmal parallel zur Anisotropieachse (z.B. zur Transmissionsrichtung der oberen Polarisationsfilterfolie) des Meßobjekts eingestellt werden.

Gemessen und aufgezeichnet wird entweder die Leuchtdichte (Luminance L) oder die Lichtstärke (luminous Intensity I) des aufgenommenen Reflex- und Streulichts über dessen Orientierung, mit dem Einstrahlwinkel des Teststrahles als Parameter. Zur Messung der Lichtstärke ist dabei darauf zu achten, daß der Durchmesser des vom einfallenden Teststrahl ausgeleuchteten Fleckes kleiner ist als der Meßfleck der Empfängeroptik, so daß für alle Einfallsrichtungen des Teststrahles der gesamte beleuchtete Fleck (Flächenelement auf dem Meßobjekt) vom Empfänger erfaßt wird. Zur Messung der Leuchtdichte (Luminanz) dagegen sollte für alle Einfallsrichtungen des Teststrahles der vom einfallenden Strahl gleichmäßig ausgeleuchtete Fleck auf dem Meßobjekt größer sein, als der dann vom Empfänger erfaßte Bereich, der durch die Pupille der zweiten Optik bestimmt wird. Dadurch entfällt bei dieser Messung eine sonst störende Abhängigkeit vom Teststrahl-Durchmesser.

Für die numerischen Auswertungen bei den beiden Meßmethoden werden zusätzlich zum Messobjekt (z.B. einem Bildschirm auf CRT- oder auf LCD-Basis) noch mindestens zwei Referenzobjekte ausgemessen und als Bezug für die Auswertung herangezogen, nämlich ein kalibrierter ideal-diffuser Reflektor (z.B. ein weißer Papierschirm, möglichst jedoch eine Fläche aus MgO, BaSO4) sowie als kalibrierter ideal-spiegelnd reflektierender Standard ein poliertes schwarzes Glas (z.B. Schottglas ND1) mit hoher Absorption und bekannter Brechzahl. Mittels dieser beiden Referenzobjekte können aber auch Nichtidealitäten der Meßanordnung zur Kompensation erfaßt werden, wie etwa die Abhängigkeit der winkelabhängigen Intensitätsverteilung vom Durchmesser des Teststrahles im Falle der Lichtstärke-Messung, bei welcher die Größe des beleuchteten Fleckes geringer ist als die des Meßfleckes. Solche die Meßergebnisse verfälschenden Störeinflüsse mußten bei den bisher bekannten Verfahren stillschweigend in Kauf genommen werden; gemäß den erfindungsgemäßen Vergleichsmessungen kompensieren sie sich nun, wodurch wesentlich allgemeiner gültige Aussagen erzielt werden.

Die Berechnung des diffusen Reflexionsfaktors (gemäß DIN 5036) und des gerichteten Reflexionsgrades erfolgt also aus den gemessenen ein- oder zweidimensionalen bidirektionalen Reflexverteilungs-Funktionen (BRDF) durch Vergleich mit jeweils einem möglichst ideal diffusen und einem möglichst ideal spiegelnden Standard. Durch den Bezug auf kalibrierte Standard-Meßobjekte ist das in dieser Erfindung beschriebene Verfahren, im Gegensatz zu den in der gattungsbildenden Publikation als bisher bekannt beschriebenen und untersuchten Verfahren, extrem stabil und reproduzierbar. Auch Nichtidealitäten des Meßgerätes einschließlich der Empfängeroptik können durch Messung von bekannten und kalibrierten Standards (z.B. ideal diffus reflektierender Reflektor) ermittelt und rechnerisch kompensiert werden.

Zur weiteren Offenbarung der Erfindung und ihrer Abwandlungen wird auf die weiteren Ansprüche und auf nachstehende Zeichnungs-Beschreibung samt ihrer Zusammenfassung am Ende ausdrücklich verwiesen, auch was die anwendungsorientierten Vorteile der stark vereinfacht symbolisch skizzierten Meßanordnungen betrifft. In der Zeichnung zeigt, schematisch auf das Prinzipielle reduziert und nicht maßstabsgerecht,
- Fig. 1: einen Meßaufbau mit im wesentlichen parallelem Test-Strahl,
- Fig.2: einen entsprechenden Meßaufbau mit gerichtet-konischem bis diffusem Test-Strahl und
- Fig.3: 3 eine detailliertere und allgemeiner gültige Darstellung eines Linsensystemes zur Abbildung auf ein Detektor-Array für die Anordnungen nach Fig.1 oder nach Fig.2.

Der in der Zeichnung dargestellte Aufbau symbolisiert eine Einrichtung zum meßtechnischen Erfassen des Reflexionsverhaltens eines reflektierenden Objektes 14, das auf Beleuchtung durch einen Teststrahl 15 mit Streustrahlen 11 (diffuse Reflexions-Komponenten) sowie mit einem Spiegelstrahl 12 (reguläre oder spekulare Komponente) reagiert. Die Brauchbarkeit einer elektrooptischer Anzeige als dem Objekt 14, und dabei insbesondere die Perfomance von Flüssigkristalldisplays oder von Kathodenstrahlanzeigen, hängt, wie oben schon dargelegt, vom Intensitätsverhältnis jener Komponenten ab. Eine Optimierung verlangt eine leicht zu handhabende und zuverlässige Meßeinrichtung für die Beurteilung der allgemeinen Bildschirm-Streueigenschaften.

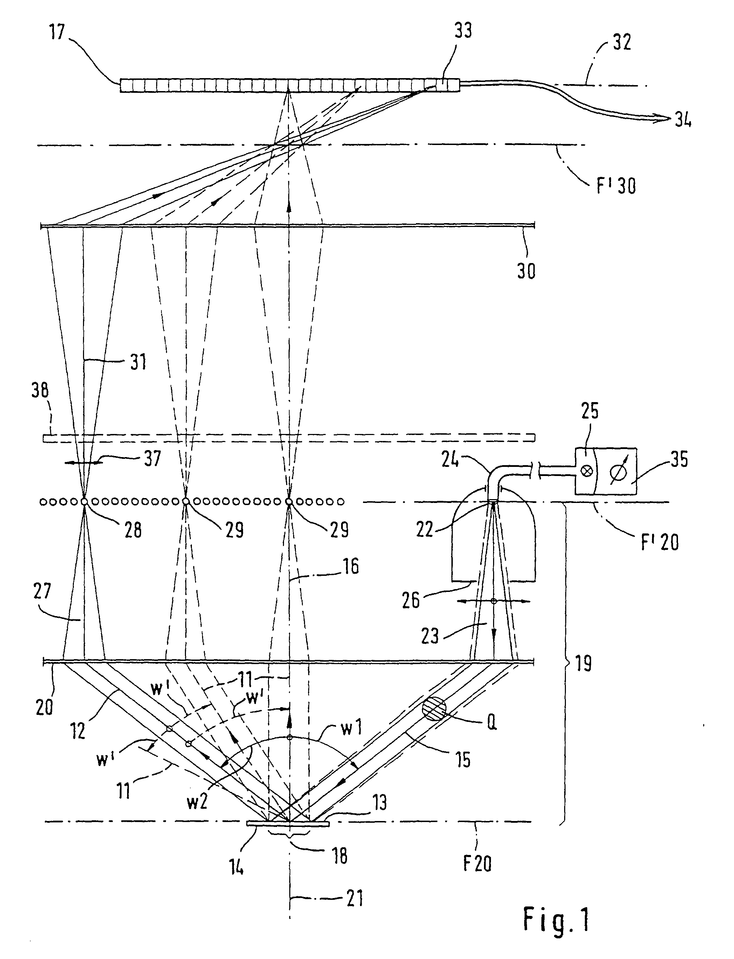

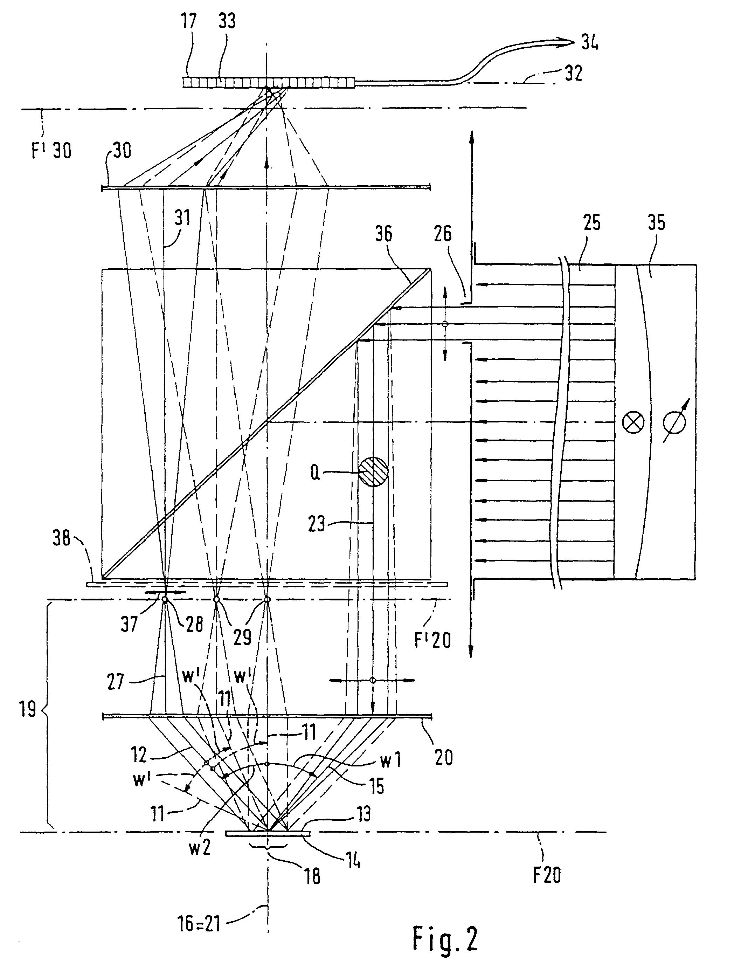

Das Meßobjekt 14 ist ein Displayelement oder ein repräsentativer Ausschnitt aus einem sonstigen Bildschirm, bzw. ein Vergleichs-Normreflektor mit ideal spiegelndem bzw. ideal diffus reflektierendem Verhalten. Das Meßobjekt 14 wird in der Beispielsdarstellung der Fig.1 und Fig.2 geneigt gegenüber der Normalen mit einem Teststrahl 15 beaufschlagt, dessen Durchmesser die Größe des beleuchteten Flächenelementes 18 bestimmt und deshalb variabel (definiert einstellbar) ist. Der Strahl-Einfallswinkel w1 ist bekanntlich gleich dem Austrittswinkel w2 seines in der Einfallsebene liegenden Spiegelstrahles 12, jeweils gemessen gegenüber der Normalen 16 auf den aktuellen Reflexionspunkt (dem genannten Flächenelement 18) des Meßobjektes 14. Wie eingangs schon näher dargelegt gilt für derzeit gebräuchliche Bildschirmtechniken, daß eine vergleichsweise möglichst schwache spekulare Reflexion (in Form des regulären Spiegelstrahles 12) inmitten kräftiger diffuser Streustrahlen 11 angestrebt wird, die auch außerhalb der (hier in der Zeichenebene liegenden) Strahlebene und unter verschiedenen vom Austrittswinkel w2 abweichenden Winkeln w' auftretenden. Deshalb ist ein Detektor-Array 17 zur optoelektrischen Umsetzung der darauf einfallenden Strahlung zweidimensional (also auch quer zur Zeichenebene) mit Detektorelementen bestückt, um als Reaktion auf die Einstrahlung eines definiert geneigten Teststrahles 15 gegen die Objekt-Oberfläche 13 sowohl die Verteilung des primär interessierenden Streulichtes wie auch der unvermeidlich überlagerten Reflexionskomponente aus reflektierenden Schichten unter der Objekt-Oberfläche 13 zu erfassen.

Wegen der Nichtidealitäten des optischen Systems ist es wie schon erwähnt praktisch nicht möglich, die Größe des Meßfleckes unabhängig vom gerade gewählten Einfallswinkel w1 konstant zu halten. Für die Messungen gemäß vorliegender Erfindung ist eine Variation des Flächenelementes 18 letztlich nun aber ohne Auswirkung, da für jeden erfaßten Einfallswinkel w1 auch Kalibrationsmessungen mit ideal reflektierenden und mit ideal streuenden Reflektoren aufgezeichnet werden. Ohnehin sind Größe und Form des beleuchteten Flächenelementes 18 in Abhängigkeit vom Einfallswinkel w1 nur für die Lichtstärke-Messung relevant, da hierbei der Meßfleck größer sein soll, als das beleuchtete Flächenelement 18.

Für die Messung erfolgt die Beleuchtung des Meßobjektes 14 mit dem Teststrahl 15 über den inversen Strahlengang eines konoskopischen Systems 19 mit kollimierender Optik 20. Bei dieser handelt es sich bekanntlich um ein aufwendiges Linsensystem, dessen grundsätzliches Verhalten in der Zeichnung mittels des geometrischen Strahlenganges durch eine symmetrisch-bikonvexe Linse veranschaulicht ist. In ihrer objektseitigen Brennebene F20 ist das Meßobjekt 14 angeordnet; vorzugsweise derart, daß seine Normale 16 auf das bestrahlte Flächenelement 18 mit der optischen Achse 21 des Systems 19 zusammenfällt. In der bildseitigen Brennebene F'20 liegt wenigstens eine gegen die Optik 20 gerichtete, möglichst unpolarisiertes Licht abstrahlende Quelle 22. Wegen der endlichen Ausdehnung der Lichtquelle 22 verlaufen die Randstrahlen parallel zum divergierenden Haupt-Strahl 23. Dessen Licht ist im allgemeinen weiß; vorzugsweise weist es aber eine spektrale Verteilung auf, die für die aktuelle Meßaufgabe individuell den realen Einsatzbedingungen des Objektes 14 angepaßt ist. Ein gemäß Fig.1 divergierender Lichtstrahl 23 wird von der Optik 20 nach der Gesetzmäßigkeit des konoskopischen Systems 20 in ein paralleles Strahlenbündel umgesetzt, das hier als Teststrahl 15 dient. Da dessen Einfallswinkel w1 nur bei einer infinitesimal kleinen Lichtquelle 22 über dem Strahl-Querschnitt Q konstant ist, sind in der Zeichnung auch die in der Praxis einer Lichtquelle endlicher Ausdehnung davon abweichenden Strahirichtungen gestrichelt angedeutet.

Für den ausgezogen dargestellten regulären Strahlengang ergibt sich aus der Zeichnung ohne weiteres die geometrische Beziehung zwischen dem Einfallswinkel w1 des prinzipiell parallelen Teststrahles 15 und dem Querabstand der wirksamen Lichtquelle 22 von der Achse 21 der Optik 20. Somit läßt sich über eine unproblematisch realisierbare Linear-Verlagerung des Licht-Strahlers 22 in der bildseitigen Brennebene F'20 der mittlere Einfallswinkel w1 des Teststrahles 15 präzise und reproduzierbar einstellen. Das ist besonders einfach durchführbar, wenn der Strahler 22 durch das abstrahlseitige Stirnende eines flexiblen Lichtleiters 24 realisiert ist, der seinerseits aus einer abseits installierten optischen Quelle 25 gespeist werden kann, wie in der Zeichnung berücksichtigt. Eine (gegebenenfalls verstellbare) Blende 26 dient der Durchmesser-Einschränkung bzw. -Formgebung des divergierenden Quell-Strahles 23 und somit der Querschnittsbestimmung (Q) des Teststrahles 15. Denn die Divergenz des eingekoppelten Lichtstrahls 23 in der hinteren Brennebene F'20 bestimmt den Durchmesser des Teststrahls 15, der das Meßobjekt 14 beleuchtet, und damit die Größe des darauf ausgeleuchteten Fleckes (Element 18).

Statt einer körperlichen (z.B. motorischen) Verschiebung eines einzigen Strahlers 22 kann aber grundsätzlich auch (nicht gezeichnet) eine Mehrzahl von möglichst punktförmigen weißen Lichtquellen als Strahlern hinter Blenden in der Brennebene F'20 fest installiert und selektiv direkt elektrisch speisbar sein. Die Strahler (22) müssen nicht selbst direkt und koaxial zum auf die Optik 20 treffenden Lichtstrahl 23 in der bildseitigen Kollimations-Brennebene F'20 positioniert sein, es ist auch eine winklige Einspiegelung über abgebogene Lichtleiter-Enden oder über eine Umlenkoptik möglich.

Das von der Quelle 25 gelieferte (praktisch) weiße Licht bedarf keiner Depolarisierung vor seiner Einstrahlung in das zu testende Objekt 14. Dagegen ist das reflektierte Streulicht polarisiert, was zu Verfälschungen der Meßergebnisse führen kann. Zur Depolarisierung des vom Meßobjekt 14 reflektierten Lichts (Strahlen 11, 12) wird deshalb zweckmäßigerweise in oder bei der hinteren Brennebene F'20 z.B. eine faseroptische Bildleiterplatte 38 angeordnet (die aus einer Vielzahl einzelner Lichtleitfasern besteht; nicht gezeichnet).

Das in der objektseitigen Brennebene F20 der kollimierenden Optik 20 liegende ebene Flächenelement 18 erzeugt gemäß der gezeichneten Strahlengeometrie in deren bildseitiger Brennebene F'20 (der sogenannten Fourier-Ebene) über die konvergierenden Bildstrahlen 27 eine winkelabhängige zweidimensionale Intensitätsverteilung der reflektierten Komponenten, die bei der Messung der Richtungsabhängigkeit der optischen Eigenschaften etwa eines Flüssigkristall-Display z.B. durch kristalloptische Interferenzeffekte bestimmt ist. Jeder Bildpunkt 28, 29 in diesem Muster entspricht folglich einer Richtung des reflektierten Lichts; wobei die Umgebung des dem Spiegelstrahl 12 zugeordneten Bildpunktes 28 überlagert ist von Bildpunkten 29 der vom Spiegelstrahl 12 um die Streuwinkel w' abweichenden Streustrahlen 11 gleicher Teststrahl-Herkunft.

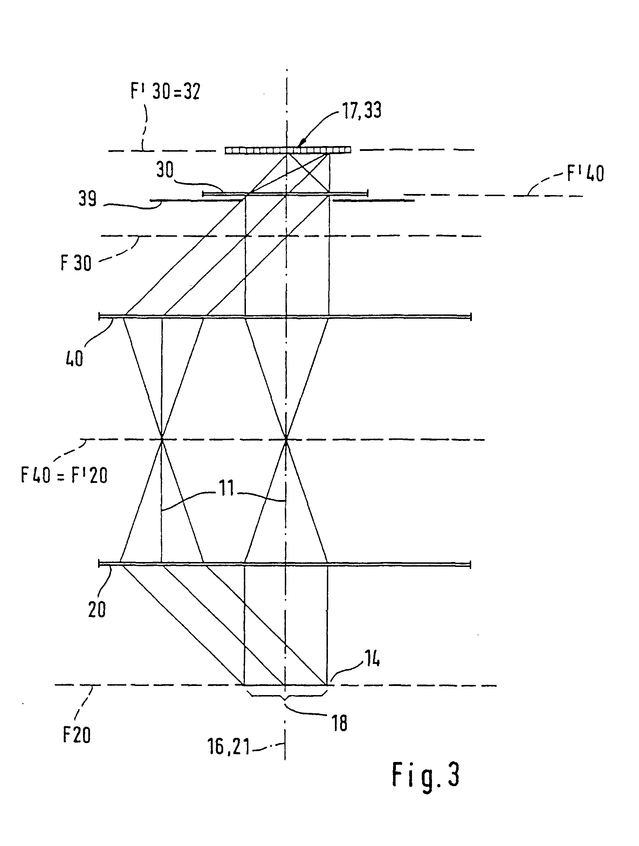

Das vergleichsweise großflächige zweidimensionale Intensitätsmuster in der hinteren Brennebene F'20 wird (gemäß den zeichnerisch skizzierten Projektionsstrahlen 31) auf eine Detektorebene 32 abgebildet. Dazu dient eine (für gute Abbildungsqualität aus mehreren Linsen kombinierte, hier aber vereinfacht skizzierte) Optik 30, deren Gegenstandsabstand zur Interferenz-Ebene (F'20) ein großes Vielfaches der Brennweite der Abbildungs-Linse 30 ist, damit ein verkleinertes Bild nahe der hinteren Brennebene F'30 entsteht, weil das Array 17 nur in kleineren Flächenabmessungen kommerziell verfügbar ist. Die Lagen der Brennebenen F, F' stellen bei Fig.1 und bei Fig.2 Sonderfälle dar, die zwar vorteilhaft aber nicht zwingend sind; Fig.3 dagegen berücksichtigt diesbezüglich einen allgemeiner gültigen Strahlengang. Aber auch die Koinzidenz der Brennebenen F40=F'20 ist nicht zwingend. Die tatsächliche Lage der Feldlinse 40 ergibt sich aus dem zur Verfügung stehenden Platz. Ebenfalls aus Platzgründen kann die Blende 37 auch vor der Brennebene F'20 angeordnet sein.

In der vereinfachten Darstellung der Zeichnung stimmt der beleuchtete Fleck (Flächenelement 18) mit dem Meßfleck überein. Wie in Fig.3 noch einmal detaillierter dargestellt gilt ganz allgemein im Rahmen vorliegender Erfindung, daß das vom Meßobjekt 14 reflektierte Licht von der kollimierenden Optik 20 über den gesamten Bereich des öffnungswinkels gesammelt und in die hintere Brennebene F'20 abgebildet wird. Dabei entspricht jedem Punkt in der Brennebene F'20 eine Ausbreitungsrichtung des vom Messfleck (Element 18) kommenden Lichtes (Strahlen 11,12). Die örtliche Intensitätsverteilung in der Brennebene F'20 entspricht deshalb der Richtungsverteilung (w2,w') des reflektierten und des gestreuten Lichtes (12,11). Durch ein Linsensystem 30/40 wird die örtliche Intensitätsverteilung verkleinert in der Detektorebene 32 auf das zweidimensionales Detektorarray 17 (z.B. eine Videokamera) abgebildet. Deren elektrischen Ausgangs-Signale 34 können dann einer elektronischen Schaltung zur Auswertung zugeführt werden.

Gemäß Fig.3 weist jenes verkleinernde Abbildungs-Linsensystem eine Abbildungs-Dptik 30 einschließlich einer einstellbaren Pupille (Irisblende 39) zur Festlegung des Durchmessers der Strahlen 11,12 auf. Damit die Pupillen-Wirkung sich nicht auf das zentrale Strahlenbündel beschränkt, sondern für die Abbildung auch die davon abweichenden Strahlenbündel durch die Blende 39 hindurch erfaßt werden, ist vor der Pupillen-Blende 39 noch eine Feldlinse 40 relativ nahe bei der hinteren Brennebene F'20 angeordnet.

Die Anordnung der Detektorelemente 33 werden also in Abhängigkeit von der Intensitätsverteilung in der hinteren Brennebene F'20 der kollimierenden Optik 20 (unmittelbar; oder über ein hier beginnendes faseroptisches Lichtleitsystem zu abseits positionierten Detektoren 33) angeregt. Die elektrischen Detektor-Ausgangssignale 34 geben somit die Intensitätswerte der aus der momentanen Test-Bestrahlung resultierenden Reflexionsanteile wieder.

Um auch besonders hoch auftretende Dynamik zwischen Spiegellichtanteilen und Streulichtanteilen (28, 29) zu beherrschen, ist für das Array 17 der Einsatz von CCD-Kameras mit Anti-Blooming-Verhalten zu bevorzugen. Denn bei denen wird ein übersprechen von übersteuerten Detektorelementen auf benachbarte (noch nicht voll ausgesteuerte) Elemente vermieden, wie es vorkommt, wenn die geringen Intensitäten diffuser Anteile zum Absetzen vom Hintergrund-Rauschen mit vergrößerter Empfindlichkeit (z.B. mit verlängerter Belichtungszeit) aufgenommen werden. Dabei wird eine Übersteuerung derjenigen Elemente in Kauf genommen, die vom Spiegelanteil (Strahl 12) angeregt werden; durch eine zusätzliche Messung mit reduzierter Empfindlichkeit wird dann die Intensitätsverteilung jenes Spiegelanteiles gesondert erfaßt.

Um jedoch auch mit preiswerteren Kameras als Detektor-Arrays 17 arbeiten zu können, kann in Weiterbildung vorliegender Erfindung vorgesehen sein, in der hinteren Brennebene F'20 der kollimierenden Optik 20 mit einer mechanisch linear-positionierbaren Blende 37 den Anteil (28) des Spiegel-Strahls 12 wahlweise auszublenden. Die Größe der parallel zur Brennebene F'20 verlagerbaren Blende 37 hängt in der Praxis von der Streucharakteristik des Objektes 14 ab. Dann wird zunächst eine Messung bei relativ geringer Empfindlichkeit durchgeführt, bei der auch die Spiegelkomponente 28 erfaßt wird, die aber nun noch nicht zur Übersteuerung führt; woraufhin eine zweite Messung mit hoher Empfindlichkeit - aber bei zum Abschatten des Spiegelanteiles 28 positionierter Blende 37 - folgt, so daß die Streukomponenten 29 voll zur Wirkung kommen. Dabei kann, um die Dynamik der Messung zu erhöhen, auch noch über ein Stellglied 35 die Ansteuerung der Teststrahl-Quelle 25 intensiviert werden.

Beim dargestellten Meßaufbau ergibt sich dort ein "blinder Fleck" für die aufgezeichnete Richtungsverteilung (Austrittswinkel w') des reflektierten Lichtes 11, wo der beleuchtende Quellstrahl 23 in die hintere Brennebene F'20 der Optik 20 eingespeist wird. Dieser "blinde Fleck" entsteht jedoch an der Stelle der Lichteinspeisung und ist somit im Bild der zweidimensionalen Reflexionsverteilung nicht in der näheren Umgebung der interessierenden spekularen (regulär spiegelnden) Reflexion angesiedelt. Außerdem können numerische Methoden zur Interpolation und damit zur "Beseitigung" dieses blinden Flecks herangezogen werden. Letztlich fällt dieser "blinde Fleck" in der Retre-Position aber beim erfindungsgemäßen konoskopischen Meßsystem garnicht ins Gewicht, weil es hier nicht um ein Ausmessen eines Retro-Reflektors geht.

Bei der gerätetechnischen Abwandlung gemäß Fig.2 gelten die vorstehenden Ausführungen zu Fig.1 sinngemäß; jedoch erfolgt die Bestrahlung des reflektierenden Flächenelementes 18 nun nicht mehr mit einem Teststrahl 15 aus parallelen, sondern aus im Brennpunkt konisch zusammenlaufenden Elementarstrahlen, weshalb das erfaßte Flächenelement an sich wesentlich kleiner wird. Die konvergierenden Strahlen entstehen, wenn im konoskopischen System 19 ein paralleler Lichtstrahl 23 in die bildseitige Brennebene F'20 der kollimierenden Optik 20 eingekoppelt wird. In der Zeichnung ist gestrichelt angedeutet, daß in der Praxis aber auch Abweichungen von der ideal-parallelen Beleuchtung 23 in der hinteren Brennebene F'20 auftreten. Solche Divergenz wirkt sich dahingehend aus, daß das im Objekt 14 bestrahlte Flächenelement 18 tatsächlich kein infinitesimal kleiner Lichtpunkt ist, sondern wieder endliche Ausdehnung zeigt, weil der Teststrahl 15 sich aus gerichtet-konischen Elementarstrahlbündeln mit leicht unterschiedlichen Ausbreitungsrichtungen und leicht unterschiedlichem Kegelöffnungswinkel zusammensetzt.

Je größer der Durchmesser (Querschnitt Q) des parallelen Lichtstrahles 23 ist, desto stärker ist die Konizität des Teststrahles 15 im Objekt 14 und somit die Annäherung an diffuse (ungerichtete, gleichzeitig aus verschiedenen Richtungen einstrahlende) Beleuchtung, wie sie üblicherweise im Arbeitsalltag vorkommt.

Die Einkopplung des Lichtstrahles 23 für einen konischen Teststrahl 15 erfolgt nun aus einer Parallellicht-Quelle 25 über eine Umlenkoptik 36, etwa wie skizziert über einen, hier aus zwei Prismen zusammengesetzten, nicht polarisierenden Strahlteilerwürfel. Zur Depolarisierung des durchfallenden Lichts (nun in beiden Richtungen) kann wieder eine faseroptische Bildleiterplatte 38 in oder bei der hinteren Brennebene F'20 angeordnet sein. Eine beispielsweise unproblematisch motorisch realisierbare Linear-Verschiebung der Quellen-Blende 26 (nun parallel zur optischen Achse 21 des Systems 19) führt wieder (entsprechend der Wirkung bei Fig.1) zur Verlagerung des Lichtstrahls 23 längs der Brennebene F'20 und somit zu einer Variation des mittleren Teststrahl-Einfallswinkels w1, wie aus der Zeichnung ersichtlich.

Auch hier ist also die vorbekannte, apparativ aufwendige mechanische Dreh-Positionierung, von Lichtquelle und Empfängersystem relativ zum Meßobjekt zur Richtungsänderung, des Teststrahles 15 durch ein einfach zu handhabendes und gut reproduzierbares optisch abbildendes System ersetzt, bei dem die Position des Strahles 23 in der Brennebene F'20 den Einfallswinkel w1 auf das Messobjekt 14 bestimmt. Und wieder wird die Gesamtheit aller im Halbraumausschnitt, der durch die Apertur des Objektives gegeben ist, auftretender Reflexionsanteile vom nachfolgenden Detektor-Array 17 erfaßt.

Auch gilt für beide Meßanordnungen (nach Fig.1 und nach Fig.2), daß eine eindimensionale Meßkurve ermittelt wird durch Messung der Lichtstärke oder der Leuchtdichte in der Einfallsebene des beleuchtenden Strahles. Das Meßergebnis hängt somit nur von einer einzigen Variablen ab, nämlich von Neigungswinkel. Der Spiegelreflexionsgrad des Meßobjekts 14 wird durch den direkten Vergleich der Amplituden der Reflexions-Meßkurve (über dem Einfallswinkel w1) des Objekts 14 mit derjenigen des kalibrierten Spiegels bei gegebener Einfallsrichtung w1 des Teststrahles 15 erhalten. Das Produkt aus dem Spiegel-Reflexionsfaktor und dem Verhältnis der Meßkurven-Maxima für das Meßobjekt und für den Referenz-Spiegel ist der Spiegelreflexionsgrad des Meßobjektes 14.

Der diffuse Reflektionsfaktor kann sogar schon aus einer eindimensionalen Meßkurve bestimmt werden, wenn hinreichende Rotationssymmetrie der Intensität des gestreuten Lichts um die Spiegelrichtung vorliegt. Denn dann können die nicht gemessenen, außerhalb der Einfallsebene gestreuten Reflexionsanteile aus der gemessenen Neigungsabhängigkeit ermittelt werden. Dafür wird angenommen, daß die Abhängigkeit der Streuintensität von der Differenz des aktuellen Azimuts zum Azimut der Einfallsebene gleich ist der Abhängigkeit der Streuintensität von der Differenz des aktuellen Neigungswinkels zum Spiegel-Neigungswinkel. Wenn aber die zweidimensionale Richtungsverteilung des gestreuten Lichts direkt gemessen wird, kann auf die Annahme der Rotationssymmetrie der Meßwerte um die Spiegelrichtung herum verzichtet werden, und die entsprechenden Integrale werden direkt aus den Meßwerten bestimmt.

Die Ermittlung des diffusen Reflexionsfaktors des Objektes erfolgt im Falle der Fig.2 wie bei Fig.1 durch die Gleichsetzung der (um die Spiegelanteile bereinigten) rein diffus reflektierten Streulichtanteile mit der Reflexion eines ideal diffus und isotrop streuenden Reflektors, also durch eine räumliche Mittelwertbildung. Die rechnerische Vorgehensweise geht aus vom bestimmten zweidimensionalen Integral über die Meßkurve des Meßobjekts 14; als Integrationsgrenzen dienen hier die Maximalwerte von Neigungswinkel und Drehwinkel, wie sie während der Messung realisiert wurden; bzw. die theoretisch maximalen Werte 360° und 90° für Azimut und Neigungswinkel bei entsprechender Extrapolation der Meßwerte. Dabei ist darauf zu achten, daß die Maximalwerte bei der Messung so gewählt werden, daß keine signifikanten Streulichtanteile unberücksichtigt bleiben.

Nach Re-Normierung der Meßkurve des Spiegels auf die Amplitude des Meßobjekts 14 (mit einem Faktor, der gleich ist dem Verhältnis vom Spiegelreflexionsgrad des Meßobjektes zum bekannten Spiegelreflexionsgrad des kalibrierten Spiegels) wird das Integral über die Spiegelmeßwerte entsprechend berechnet und vom Integral über die Meßwerte des Objektes 14 subtrahiert. Wie man leicht einsieht, wird damit der diffuse Reflexionsfaktor für den idealen Spiegel zu Null, während für den ideal streuenden Reflektor der Wert Eins ermittelt wird.

Diese erfindungsgemäßen Einrichtungen zum Beurteilen des Reflexionsverhaltens eines Objektes, insbesondere eines elektrooptischen Anzeigeelementes, bilden also die konoskopisch erzeugte zweidimensionale (ebene) Intensitätsverteilung einer Reflexstrahlung auf ein zweidimensionales Detektorarray ab, Die Intensitätsverteilung resultiert aus einem optisch einstellbaren Teststrahl, der über die kollimierende Optik eben dieses konoskopischen Systems selbst eingekoppelt wird. Jener Teststrahl entsteht dabei seinerseits kollimiert aus einem unmittelbar in die bildseitige Brennebene der kollimierenden Optik eingespeisten divergenten Quellstrahl bzw. konvergierend aus einem in jene Brennebene über eine Umlenkoptik eingespeisten kollimierten Quellstrahl. Die Position des jeweiligen Quellstrahles in der hinteren (bildseitigen) Brennebene der kollimierenden Optik bestimmt Einfallswinkel und -ebene des Teststrahles. Um insbesondere auch die Reflexionseigenschaften von Anzeigeelementen und deren Bauteilen bei quasi-diffuser Beleuchtung messen und bewerten zu können, wird der zweiterwähnte, also der kollimierte Quellstrahl über möglichst nichtpolarisierende Strahlteiler in Richtung der optischen Achse des konoskopischen Linsensystems auf dessen kollimierende Optik abgelenkt. Hier wird die Tatsache ausgenutzt, daß ein kollimierter Lichtstrahl, der in der hinteren Brennebene parallel zur optischen Achse der konoskopischen Linse einfällt, zu einem im vorderen Brennpunkt konvergierenden Strahl geformt wird. Mit zunehmendem Kegelwinkel des Teststrahles ergibt sich ein Übergang zwischen konisch konvergierender und diffuser Beleuchtung, Über den Durchmesser des kollimierten Quellstrahles ist also eine der diffusen Bestrahlung ähnliche aber reproduzierbare Divergenz des Teststrahles und damit der Meß-Beleuchtung einstellbar. Wenn der Durchmesser des kollimierten Quellstrahles sich schließlich über die gesamte hintere (bildseitige) Brennebene der kollimierenden Optik erstreckt, so daß Licht aus der gesamten Apertur der Optik kommt, wenn also die Apertur sich dem Halbraum weitestgehend annähert, wird die größtmögliche Diffusität der Testbeleuchtung erzielt. So läßt sich das Reflexionsverhalten elektrooptischer Displays ohne direkte mechanische Richtungs- oder Winkel-Abtastung des Halbraumes für alle interessierenden Bestrahlungsrichtungen und Bestrahlungsarten (gerichtet bis diffus) mit weißem oder der aktuellen Fragestellung spektral angepaßtem Licht rasch und reproduzierbar auch quantitativ bestimmen.

## Patentansprüche

1. Einrichtung zum Beurteilen des Reflexionsverhaltens eines Objektes (14) mittels eines ein Flächenelement (18) von dessen Oberfläche (13) beleuchtenden Teststrahles (15) zum Auslösen von Reflex-Streustrahlen (11) und/oder eines regulären Spiegel-Strahles (12), die ein zweidimensionales Array (17) von Detektorelementen (33) anregen, **dadurch gekennzeichnet,**
**daß** sie zusätzlich zu dem zweidimensionalen Detektor-Array (17) mit einer spektral einstellbaren Quelle (25) und mit einer kollimierenden Optik (20) eines konoskopischen Systems (19) ausgestattet ist, in das ein von der Quelle (25) gelieferter und längs der hinteren, bildseitigen Brennebene (F'20) der Optik (20) linear verlagerbarer Quell-Strahl (23) eingespeist ist, um ihn mittels der invers betriebenen Optik (20) zu einem, unter veränderbarem Einfallswinkel (w1) und mit einer zwischen parallel und unterschiedlich konvergierend einstellbaren Punktbeleuchtungs-Strahlgeometrie auf das Flächenelement (18) gerichteten, Teststrahl (15) zu transformieren, dessen Reflexionen über einen weiten Bereich diffuser Reflexionswinkel (w') von der selben Optik (20) als eine vom Einfallswinkel (w1) abhängige zweidimensionale Intensitätsverteilung in jene Brennebene (F'20) transformiert und aus dieser heraus auf das Detektor-Array (17) projiziert sind.

2. Einrichtung nach Anspruch 1, **dadurch gekennzeichnet,**
**daß** das Detektor-Array (17) auch einen zum Teststrahl (15) regulären Spiegel-Strahl (12) erfaßt.

3. Einrichtung nach Anspruch 2, **dadurch gekennzeichnet,**
**daß** eine parallel zur bildseitigen Brennebene (F'20) der kollimierenden Optik (20) verschiebbare Blende (37) zum Abschatten des Spiegelstrahles (12) vorgesehen ist.

4. Einrichtung nach Anspruch 2 oder 3, **gekennzeichnet**
**durch** einen Quell-Strahl (23) variabler Intensität und/oder variablen Spektrums.

5. Einrichtung nach einem der vorangehenden Ansprüche, **dadurch gekennzeichnet,**
**daß** im Quell-Strahl (23) eine hinsichtlich ihrer Querschnittsgeometrie und/oder ihres Durchmessers einstellbare Blende (26) vorgesehen ist.

6. Einrichtung nach Anspruch 5, **dadurch gekennzeichnet,**
**daß** eine elektrooplische Blende vorgesehen ist.

7. Einrichtung nach einem der vorangehenden Ansprüche, **dadurch gekennzeichnet,**
**daß** im Quell-Strahl (23) eine verschiebbare Blende (26) zur Verlagerung des Quell-Strahles (23) in der Ebene der kollimierenden Optik (20) vorgesehen ist.

8. Einrichtung nach einem der vorangehenden Ansprüche, **dadurch gekennzeichnet,**
**daß** ein Depolarisator (38) im Bereich der bildseitigen Brennebene (F'20) der kollimierenden Optik (20) angeordnet ist.

9. Einrichtung nach einem der vorangehenden Ansprüche, **dadurch gekennzeichnet,**
**daß** für die Abbildung der zweidimensionalen Intensitätsverteilung in der bildseitigen Brennebene (F'20) der kollimierenden Optik (20) auf das zweidimensionale Detektor-Array (17) eine Optik (30) mit einstellbarer Pupille (39) und mit einer Feldlinse (40) vorgesehen ist.

10. Einrichtung nach einem der vorangehenden Ansprüche, **dadurch gekennzeichnet,**
**daß** für vermessene Einfallsrichtungen (w1) des Teststrahles (15) außerdem ein Austausch des Meßobjektes (40) gegen ideal spiegelnde und gegen ideal streuende Referenzelemente für Vergleichsmessungen vorgesehen ist.

11. Einrichtung nach einem der vorangehenden Ansprüche, **dadurch gekennzeichnet,**
**daß** direkt in die hintere Brennebene (F'20) der kollimierenden Optik (20) ein divergierender Quell-Strahl (23) aus einem in der Brennebene (F'20) verlagerbaren oder ortsumschaltbaren Strahler (22) eingespeist ist, der von der Optik (20) in einen parallelen Teststrahl (15) transformiert wird.

12. Einrichtung nach einem der vorangehenden Ansprüche, **dadurch gekennzeichnet,**
**daß** reflektiv in die hintere Brennebene (F'20) der kollimierenden Optik (20) ein kollimierter Quell-Strahl (23) aus einer verlagerbaren oder ortsumschaltbaren Blende (26) eingespeist ist, der von der Optik (20) in einen konischen Teststrahl (15) transformiert wird.

## Claims

1. Apparatus for assessing the reflection behaviour of an object (14) by means of a test beam (15) which illuminates a surface element (18) of the surface (13) of the object for producing reflection scatter beams (11) and/or a regular specular beam (12) which excite a two-dimensional array (17) of detector elements (33), **characterised in that** in addition to the two-dimensional detector array (17) it is provided with a spectrally adjustable source (25) and a collimating optical means (20) of a conoscopic system (19) into which there is fed a source beam (23) delivered by the source (25) and displaceable linearly along the rear image-side focal plane (F'20) of the optical means (20) in order to transform it by means of the reversely operated optical means (20) to a test beam (15) which is directed on to the surface element (18) at a variable angle of incidence (w1) and with a spot illumination beam geometry adjustable between parallel and differently converging, the reflections of which test beam are transformed over a wide range of diffuse reflection angles (w') by the same optical means (20) in the form of a two-dimensional intensity distribution dependent on the angle of incidence (w1) into said focal plane (F'20) and are projected out of same on to the detector array (17).

2. Apparatus according to claim 1 **characterised in that** the detector array (17) also detects a specular beam (12) which is regular in relation to the test beam (15).

3. Apparatus according to claim 2 **characterised in that** there is provided an aperture means (37) for shading off the specular beam (12), which is displaceable in parallel relationship with the image-side focal plane (F'20) of the collimating optical means (20).

4. Apparatus according to claim 2 or claim 3 **characterised by** a source beam (23) of variable intensity and/or variable spectrum.

5. Apparatus according to one of the preceding claims **characterised in that** provided in the source beam (23) is an aperture means (26) which is adjustable in respect of its cross-sectional geometry and/or its diameter.

6. Apparatus according to claim 5 **characterised in that** there is provided an electro-optical aperture means.

7. Apparatus according to one of the preceding claims **characterised in that** provided in the source beam (23) is a displaceable aperture means (26) for displacement of the source beam (23) in the plane of the collimating optical means (20).

8. Apparatus according to one of the preceding claims **characterised in that** a depolariser (38) is arranged in the region of the image-side focal plane (F'20) of the collimating optical means (20).

9. Apparatus according to one of the preceding claims **characterised in that** there is provided an optical means (30) with an adjustable pupil (39) and a field lens (40) for forming the image of the two-dimensional intensity distribution in the image-side focal plane (F'20) of the collimating optical means (20) on the two-dimensional detector array (17).

10. Apparatus according to one of the preceding claims **characterised in that** for measured directions of incidence (w1) of the test beam (15) there is also provided exchange of the measurement object (40) for ideally reflecting and ideally scattering reference elements for comparative measurements.

11. Apparatus according to one of the preceding claims **characterised in that** a divergent source beam (23) is fed directly into the rear focal plane (F'20) of the collimating optical means (20) from a beam-emitting device (22) which is displaceable in the focal plane (F'20) or which can be switched over in respect of position, and is transformed by the optical means (20) into a parallel test beam (15).

12. Apparatus according to one of the preceding claims **characterised in that** a collimated source beam (23) is fed reflectively into the rear focal plane (F'20) of the collimating optical means (20) from an aperture means (26) which is displaceable or which can be switched over in respect of location, and is transformed by the optical means (20) into a conical test beam (15).

## Revendications

1. Dispositif permettant d'apprécier le comportement à la réflexion d'un objet (14) au moyen d'un rayon test (15) éclairant un élément de surface (18) de sa surface (13), pour déclencher des rayons de réflexion diffuse (11) et/ou un rayon de réflexion régulière (12), lesquels excitent un ensemble bidimensionnel (17) d'éléments de détection (33), **caractérisé en ce qu'**il est équipé, en plus de l'ensemble de détecteurs (17) bidimensionnel, d'une source (25) de spectre réglable et d'une optique de collimation (20) d'un système conoscopique (19), dans lequel est envoyé un rayon source (23), fourni par la source (25) et déplaçable linéairement le long du plan focal arrière F' (20) côté image de l'optique (20) afin de le transformer, au moyen de l'optique (20) fonctionnant de manière inverse, en un rayon test (15) qui est dirigé sur l'élément de surface (18), sous un angle d'incidence (w1) variable et avec une géométrie des rayons d'éclairage ponctuels réglable entre une convergence parallèle et une convergence différente, rayon test dont les réflexions sont transformées, sur une large plage dangles de réflexion diffuse (w'), par la même optique (20) en une distribution d'intensité bidimensionnelle dépendant de l'angle d'incidence (w1) dans le plan focal F' (20), et sont projetées à partir de celui-ci sur l'ensemble de détecteurs (17).

2. Dispositif selon la revendication 1, **caractérisé en ce que** l'ensemble de détecteurs (17) détecte aussi un rayon de réflexion régulière (12) du rayon test (15).

3. Dispositif selon la revendication 2, **caractérisé en ce qu'**il est prévu un diaphragme (37) qui peut coulisser parallèlement au plan focal F' (20) côté image de l'optique de collimation (20) pour obscurcir le rayon réfléchi (12).

4. Dispositif selon la revendication 2 ou 3, **caractérisé par** un rayon source (23) d'intensité variable et/ou de spectre variable.

5. Dispositif selon l'une des revendications précédentes, **caractérisé en ce qu'**il est prévu dans le rayon source (23) un diaphragme (26) dont la géométrie de section et/ou le diamètre sont réglables.

6. Dispositif selon la revendication 5, **caractérisé en ce qu'**il est prévu un diaphragme optoélectronique.

7. Dispositif selon l'une des revendications précédentes, **caractérisé en ce qu'**il est prévu dans le rayon source (23) un diaphragme (26) déplaçable, pour déplacer le rayon source (23) dans le plan de l'optique de collimation (20).

8. Dispositif selon l'une des revendications précédentes, **caractérisé en ce qu'**un dépolarisateur est disposé dans la zone du plan focal F' (20) côté image de l'optique de collimation (20).

9. Dispositif selon l'une des revendications précédentes, **caractérisé en ce que** pour reproduire la distribution d'intensité bidimensionnelle dans le plan focal F' (20) côté image de l'optique de collimation (20) sur l'ensemble de détecteurs (17) bidimensionnel, il est prévu une optique (30) avec pupilles (39) réglables et avec une lentille de champ (40).

10. Dispositif selon l'une des revendications précédentes, **caractérisé en ce que** pour les sens d'incidence (w1) mesurés du rayon test (15) il est prévu en outre un échange de l'objet de mesure (40) contre des éléments de référence réfléchissant de manière idéale et contre des éléments de référence diffusant de manière idéale pour des mesures comparatives.

11. Dispositif selon l'une des revendications précédentes, **caractérisé en ce qu'**on envoie directement dans le plan focal arrière F' (20) de l'optique de collimation (20), un rayon source (23) divergent à partir d'une source de rayonnement (22) déplaçable dans le plan focal F' (20) ou commutable localement, qui est transformé par l'optique (20) en un rayon test (15) parallèle.

12. Dispositif selon l'une des revendications précédentes, **caractérisé en ce qu'**on envoie par réflexion dans le plan focal arrière F' (20) de l'optique de collimation (20), un rayon source (23) orienté, à partir d'un diaphragme (26) déplaçable ou commutable localement, qui est transformé par l'optique (20) en un rayon test (15) conique.
